# EUROPÄISCHE PATENTSCHRIFT

(11) **EP 1 454 517 B1**
(45) Veröffentlichungstag und Bekanntmachung des Hinweises auf die Patenterteilung: **07.11.2007**
(21) Anmeldenummer: 03005030.6
(22) Anmeldetag: 06.03.2003
(51) Int. Cl.: A01B 49/06

(54) **Selbstfahrende Bestellkombination**
Self-propelled cultivating and sowing combination
Machine combinée de culture et de semis automotrice

(43) Veröffentlichungstag der Anmeldung: 08.09.2004
(73) Patentinhaber: Lemken GmbH & Co. KG, 46519 Alpen (DE)
(72) Erfinder: Siebers, Josef, 46509 Xanten (DE); Giesen, Gottfried, 47495 Rheinberg (DE)
(74) Vertreter: Schulte, Jörg

(56) Entgegenhaltungen:
- EP-A- 0 419 388
- EP-A- 0 615 681
- EP-A- 0 843 957
- DE-A- 19 836 780
- GB-A- 2 147 481
- US-A- 2 556 072

## Beschreibung

Die Erfindung betrifft eine selbstfahrende Bestellkombination mit einer Tankeinheit, mit mindestens einer Triebachse und einer hinteren Achse, mit einem Zwischenanbauraum und einem Heckanbauraum, mit einer Bodenbearbeitungseinheit, die dem Zwischenanbauraum zugeordnet ist und mit Säscharen, die dem Heckanbauraum zugeordnet sind.

Auf dem Markt befinden sich Systemfahrzeuge, an denen unterschiedliche Baugruppen angebaut werden können, z.B. auch die Baugruppen, die für das Bearbeiten des Bodens als auch für das Ausbringen von Saatgut erforderlich sind. Nachteilig bei diesen Systemen ist, dass die universelle Einsetzbarkeit im Vordergrund steht, nicht aber ein optimales Arbeitsergebnis.

Aufgabe der Erfindung ist es, eine selbstfahrende Bestellkombination zu schaffen, die sowohl eine optimale Bodenbearbeitung, wie Rückverfestigung wie auch Aussaat ermöglicht.

Die Aufgabe wird dadurch gelöst, dass die Bodenbearbeitungseinheit als Kreiselegge mit rotierenden Arbeitswerkzeugen ausgebildet ist und vor der Kreiselegge eine Walze angeordnet ist, die in Verbindung mit den Rädern der Triebachse eine ganzflächige Rückverfestigung des Bodens bewirkend und vorzugsweise motorisch angetrieben ausgebildet ist und dass die hintere Achse aushebbar und absenkbar ist. Durch diese erfindungsgemäße Lösung wird der Acker vor der Bodenbearbeitungseinheit vollständig rückverfestigt, so dass die als Kreiselegge ausgebildete Bodenbearbeitungseinheit sehr flach und dadurch auch sehr energiesparend arbeiten kann und so für die Aussaat ein optimales Saatbett herstellt. Die hintere Achse kann so während der Arbeit ausgehoben werden, um Spuren zu vermeiden. Der hintere Teil der selbstfahrenden Bestellkombination wird dann auf der Walze abgestützt.

Erfindungsgemäß ist weiter vorgesehen, dass die Kreiselegge in ihrer Arbeitstiefe über die Walze führbar ausgebildet ist. Durch diese geführte Ausführung kann sie einfach in Abhängigkeit von der Walze eingestellt werden, und zwar äußerst flach. Egal ob die vorlaufende Walze tief oder weniger tief in den Boden einsinkt, bleibt die eingestellte Arbeitstiefe der Kreiselegge und damit die Eingriffstiefe ihrer rotierenden Arbeitswerkzeuge gleich.

Erfindungsgemäß ist weiter vorgesehen, dass vor der Walze tiefen- und winkeleinstellbare Planierwerkzeuge angeordnet sind. Über die Planierwerkzeuge wird der Boden bereits vor den Rückverfestigungsvorgang der Walzen eingeebnet, so dass auch ein ursprünglich schlecht und unsauber vorbearbeiteter Acker doch noch für die Aussaat gut vorbereitet wird.

Um eine optimale Rückverfestigung zu ermöglichen ist vorgesehen, dass die Walze mit mehreren, nebeneinander angeordneten Walzenelementen ausgerüstet ist, die in Arbeitsrichtung hinter den Rädern der Triebachse beidseitig der Tankeinheit Freiräume belassend angeordnet sind. Durch diese Maßnahme werden Kosten eingespart, da dort, wo der Boden bereits von den Rädern der Triebachse rückverfestigt worden ist, keine Walzenelemente mehr vorgesehen sind. Es unterbleibt eine nachteilige Mehrfachverfestigung. Die so geschaffenen Freiräume erleichtern auch den Zugang zur Maschine, insbesondere für Einstell- und Wartungsarbeiten.

Erfindungsgemäß ist weiter vorgesehen, dass auch die Walze aushebbar und absenkbar ausgebildet ist, vorzugsweise wechselseitig mit der hinteren Achse. Für den Wendevorgang auf dem Vorgewende oder für Transportfahrten wird die hintere Achse mit den Rädern abgesenkt und die Walzen ausgehoben. Bei der Arbeit ist die hintere Achse dagegen abgesenkt. Dies kann wechselweise geschehen, und zwar bezogen auf den jeweiligen Einsatzfall. Es wird nur die Baueinheit angetrieben, die gerade abgesenkt ist.

Zur zusätzlichen Vorverdichtung des Bodens sind hinter der hinteren Achse und vor der mit Säscharen ausgerüsteten Säschiene Reihenverdichter vorgesehen, vorzugsweise eine Packerwalze mit nebeneinander angeordneten Ringelementen. Diese Ausführung sorgt dafür, dass bereits vor den Säscharen der Boden zusätzlich vorverdichtet wird, so dass auch die nachfolgenden Säschare bereits mit geringem Schardruck das Saatgut präzise ablegen können. Zusätzlich wird so sichergestellt, dass in unebenem Gelände, wo die vor der hinteren Achse angeordneten Walzenelemente unter Umständen keine gleichmäßige Rückverdichtung des Bodens sicherstellen können, dennoch über die nachgeordnete Packerwalze für die Saatgutablage optimal rückverfestigte Bodenstreifen hergestellt werden.

Ein einwandfreier Transport ist gegeben, weil die Säschiene mit Säscharen, die Bodenbearbeitungseinheit und auch der Reihenverdichter einklappbar ausgebildet sind. Somit kann auch eine breite selbstfahrende Bestellkombination auf eine Transportbreite gebracht werden, die eine sichere Transportfahrt auf Straßen ermöglicht.

Erfindungsgemäß ist weiter vorgesehen, dass die Kreiselegge über einen Antriebsstrang durch die Motorgetriebeeinheit antreibbar ausgebildet ist und dass dem Antriebsstrang eine das Antriebsdrehmoment erfassende und bei Überschreiten eines vorgegebenen Grenzwertes unterbrechende Einrichtung zugeordnet ist. Durch das Vorsehen der Einrichtung kann vorteilhaft der aktuelle Belastungszustand ermittelt werden, und zwar als verwertbares Signal, das bei einer Überlastung des Antriebsstranges dazu genutzt wird, die Kupplung des Antriebes oder eine andere das Antriebsmoment übertragende Vorrichtung zu trennen. Durch diese Art der Überlastsicherung tritt praktisch kein Verschleiß auf, da diese Art der Trennung des Antriebsmomentes jeglichen Verschleiß ausschließt. Nach Beseitigung der Ursache der Antriebserhöhung kann dann die Maschine wieder in Betrieb genommen werden.

Die Einrichtung wird weiter optimiert, indem eine bei Erreichen des Drehmomentgrenzwertes eine kurzzeitige Drehrichtungsumkehr der rotierenden Arbeitswerkzeuge bewirkende Schaltvorrichtung vorgesehen ist. Über die Schaltvorrichtung, die bei Erreichen eines Drehmomentgrenzwertes eine Drehrichtungsumkehr der rotierenden Werkzeuge bewirkt, werden eventuell eingeklemmte Steine oder andere Bodenhindernisse wieder frei gegeben, ohne dabei den Arbeitsfluss unterbrechen zu müssen. Ohne dass der Fahrer aktiv werden muss, wird danach das Antriebsdrehmoment wieder erhöht und die ursprüngliche Drehrichtung der rotierenden Werkzeuge wieder eingestellt. Dabei ist erfindungsgemäß vorgesehen, dass die Drehrichtungsumkehr der rotierenden Arbeitswerkzeuge auf 10 % bis 100 % einer Werkzeugumdrehung eingestellt ist, vorzugsweise auf 50 %.

Schließlich ist erfindungsgemäß vorgesehen, dass die Tankeinheit aus mehreren Kammern besteht, die für die Aufnahme von Dünger und/oder mindestens einer Saatgutsorte geeignet ausgebildet sind. Durch diese Tankeinheit kann so gleichzeitig mit der Aussaat auch Dünger ausgebracht werden. Durch die Aufnahme mehrerer Saatgutsorten können gleichzeitig mehrere Saatgüter oder für verschiedene Arbeitsvorgänge verschiedene Saatgüter mitgeführt werden. In Verbindung mit der großen Tankeinheit kann so, ohne Dünger oder Saatgut zwischenzeitlich auffüllen oder wechseln zu müssen, gleichzeitig gedüngt und gesät werden, aber auch auf mehreren Feldern unterschiedliche Saatgüter ausgebracht werden.

Weitere Einzelheiten und Vorteile des Erfindungsgegenstandes ergeben sich aus der nachfolgenden Beschreibung und der zugehörigen Zeichnung, in der ein bevorzugtes Ausführungsbeispiel mit den notwendigen Einzelheiten dargestellt ist. Es zeigen:
- Figur 1: eine Seitenansicht der selbstfahrenden Bestellkombination und
- Figur 2: eine schematische Draufsicht der selbstfahrenden Bestellkombination.

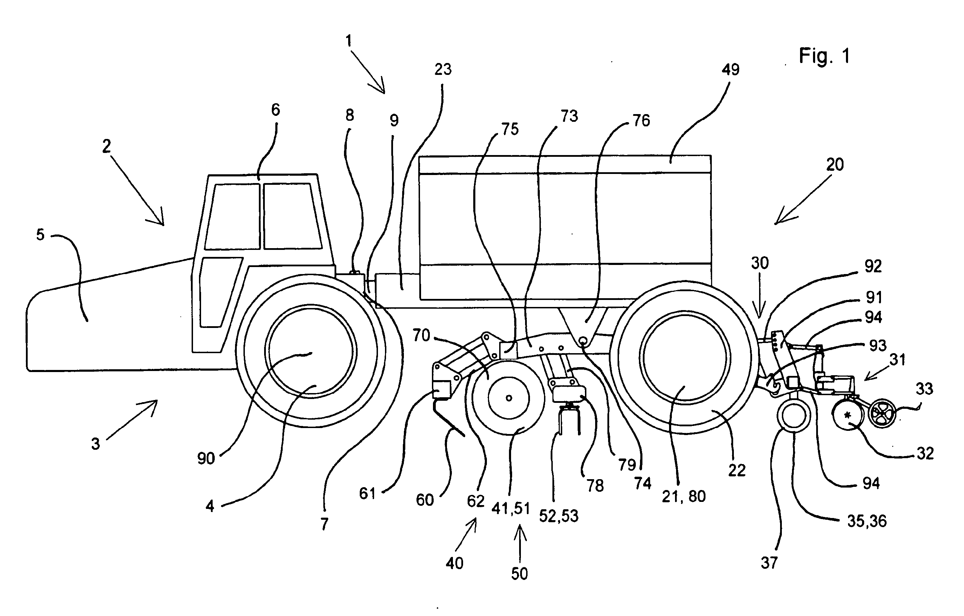

Die Figur 1 zeigt eine Seitenansicht der selbstfahrenden Bestellkombination (1). Vorne befindet sich eine Triebkopfeinheit (2), die über eine Verbindungseinrichtung (7) mit einer Aufsatteleinrichtung (20) verbunden ist. Die Triebkopfeinheit (2) besteht aus einer Triebachse (3) mit Rädern (4), einer Motorgetriebeeinheit (5) und der Kabine (6). Die Triebkopfeinheit (2) entspricht praktisch einem modernen Traktor ohne Frontachse und Hubhydraulik. Die Mitte der Triebachse (3) ist mit (90) bezeichnet.

Die Triebkopfeinheit (2) ist wie schon zuvor erwähnt über die Verbindungseinrichtung (7) mit der Aufsatteleinrichtung (20) verbunden. Die Verbindungseinrichtung (7) besteht aus einer vertikalen Achse (8) und einer in Fahrtrichtung liegenden horizontalen Pendelachse (9).

Die Aufsatteleinrichtung (20) weist hinten eine hintere Achse (21) mit Rädern (22) auf. Sie trägt die Tankeinheit (49), die unterteilt ist, um sowohl Saatgut als auch Düngemittel für die gleichzeitige Ausbringung aufnehmen zu können. Die Verbindungseinrichtung (7) ist so ausgelegt, dass sie Lenkeinschläge des Triebkopfeinheit (2) in Relation zur Aufsatteleinrichtung (20) und eine individuelle Bodenanpassung der Triebachse (3) und der hinteren Achse (21) zulässt.

Die Aufsatteleinrichtung (20) weist einen Rahmen (23) auf, der die Kuppeleinrichtung (30) aufnimmt, an der die Reihenverdichter (35) und die Säschiene (31) mit Säscharen (32) und Druckrollen (33) auswechselbar angebaut sind.

Über das quer zur Fahrtrichtung angeordnete Gelenk (74) ist eine Traverse (73) mit dem Rahmen (23) verbunden. Die Traverse (73) nimmt vorne die Bodenbearbeitungseinheit (40) und hinten die hintere Achse (21) auf.

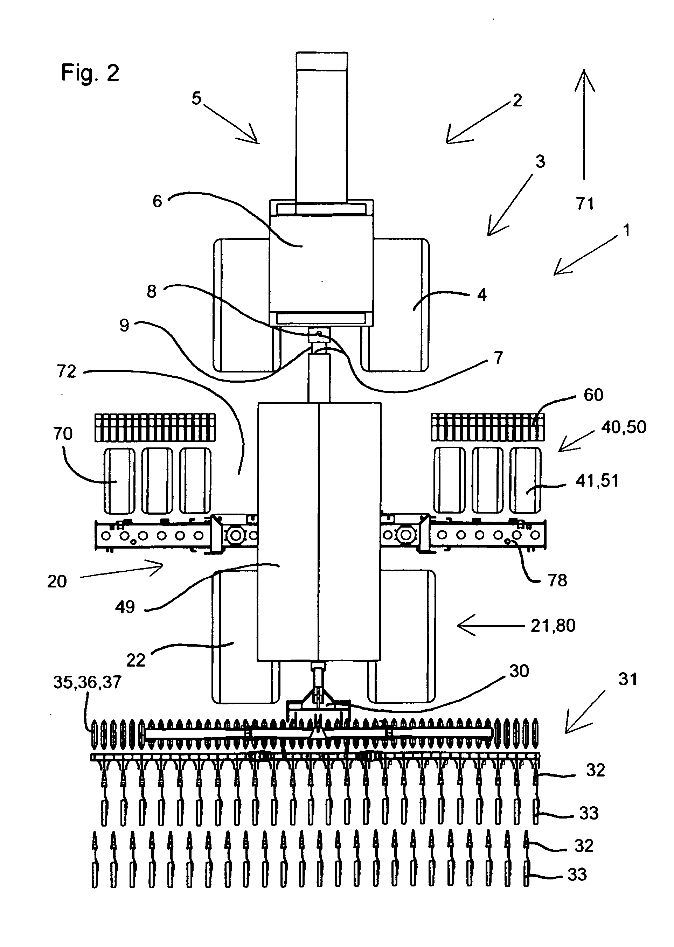

Die Bodenbearbeitungseinheit (40) weist eine Walze (41) mit Walzenrahmen (75) auf. Über die Lenker (62) und den Rahmen (61) sind zusätzliche Planierwerkzeuge (60) an dem Walzenrahmen (75) angeordnet. Hinter der Walze (41) ist eine Kreiselegge (78) über die Lenker (79) mit der Traverse (73) verbunden, die um die Konsole (76) schwenkbar angeordnet ist. Die Kreiselegge (78) weist rotierende Arbeitswerkzeuge (53) auf. Sowohl die Planierwerkzeuge (60) als auch die Kreiselegge (78) können in ihrer Lage und Arbeitstiefe individuell eingestellt werden. Auf die dafür üblichen Einstellmittel wurde der Übersichtlichkeit halber hier verzichtet. Die Walze (41) besteht aus mehreren Walzenelementen (70), was insbesondere der Figur 2 zu entnehmen ist. In Arbeitsrichtung (71) gesehen befinden sich die Planierwerkzeuge (60) vor den Walzenelementen (70) und die Kreiselegge (78) hinter den Walzenelementen (70).

Über nicht dargestellte Hydraulikzylinder kann die Traverse (73) um das Gelenk (74) so verschwenkt werden, dass sich entweder nur die Walze (41), nur die hintere Achse (21) oder beide Bauteile zusammen mit einem voreingestellten Gewichtsanteil auf den Boden abstützen. Sowohl die Walze (41) als auch die hintere Achse (21) werden angetrieben, um für eine ausreichende Traktion zu sorgen. Die hintere Achse (21) ist in diesem Fall als Antriebsachse (80) ausgebildet. Sowohl die Triebachse (3) als auch die Antriebsachse (80) werden in diesem speziellen Fall hydraulisch angetrieben wie auch die Walze (41).

Die Kuppeleinrichtung (30) trägt den Reihenverdichter (35) über dem oberen Lenker (92) und den unteren Lenkern (93), die mit dem Koppelrahmen (91) des Reihenverdichters (35) verbunden sind. Die Säschiene (31) ist über Lenker (94) mit dem Reihenverdichter (35) verbunden. Der Reihenverdichter (35) ist hier als Packerwalze (36) mit Ringelementen (37) dargestellt. Der Abstand der Ringelemente (37) richtet sich nach dem Reihenabstand der Säschare (32). Dies ist insbesondere auch der Figur 2 zu entnehmen. Sowohl der Reihenverdichter (35) als auch die Säschiene (31) weisen Schnellkuppelsysteme auf, um für verschiedene Einsatzfälle Reihenverdichter (35) mit anderen Ringelementen oder anderen Ringabständen einzusetzen oder eine andere Säschiene bzw. ein anderes Säsystem anbauen zu können, z.B. ein Einzelkornsäsystem, ein Säsystem mit zusätzlicher Düngeeinrichtung oder ein Säsystem mit anderen Reihenabständen.

Die Figur 2 zeigt eine schematische Draufsicht auf die selbstfahrende Bestellkombination (1). In Arbeitsrichtung (71) befindet sich vorne die Triebkopfeinheit (2) mit der Triebachse (3). Links und rechts weist die Triebachse (3) die Räder (4) auf. Die Verbindungseinrichtung (7), die die Triebkopfeinheit (2) mit der Aufsatteleinrichtung (20) verbindet, ist weit vorne angeordnet. Die Aufsatteleinrichtung (20) trägt die Bodenbearbeitungseinheit (40) bzw. die Gerätekombination (50) mit den Planierwerkzeugen (60) und der Walze (41) mit walzenförmigen Werkzeugen (51) und die Kreiselegge (78). Die Walze (41) weist einzelne Walzenelemente (70) auf. Direkt hinter den Rädern (4) der Triebachse (3) sind keine Walzenelemente (70) vorgesehen. Die dadurch beidseitig der Tankeinheit (49) gebildeten Freiräume (72) erleichtern den Zugang zur Tankeinheit (49) bzw. zur Aufsatteleinrichtung (20).

Hinten weist die Aufsatteleinrichtung (20) die hintere Achse (21) bzw. Antriebsachse (80) mit den Rädern (22) auf. Der Figur 2 ist zusätzlich zu entnehmen, wie die Säschiene (31) mit den Säscharen (32) und den Druckrollen (33) in Relation zum Reihenverdichter (35) angeordnet ist.

Alle genannten Merkmale, auch die den Zeichnungen allein zu entnehmen sind, können allein und in Kombination vorgesehen werden.

## Patentansprüche

1. Selbstfahrende Bestellkombination (1) mit einer Tankeinheit (49), mit mindestens einer Triebachse (3) und einer hinteren Achse (21), mit einem anbaubare Baugruppen aufnehmenden Zwischenanbauraum und einem andere Baugruppen aufnehmenden Heckanbauraum, wobei dem Zwischenanbauraum eine Bodenbearbeitungseinheit (40) und dem Heckanbauraum Säscharen (32) zugeordnet sind,
**dadurch gekennzeichnet,**
**dass** die Bodenbearbeitungseinheit (40) als Kreiselegge (78) mit rotierenden Arbeitswerkzeugen (53) ausgebildet ist und vor der Kreiselegge (78) eine Walze (41) angeordnet ist, die in Verbindung mit den Rädern (4) der Triebachse (3) eine ganzflächige Rückverfestigung des Bodens bewirkend und vorzugsweise motorisch angetrieben ausgebildet ist und dass die hintere Achse (21) aushebbar und absenkbar ist.

2. Selbstfahrende Bestellkombination nach Anspruch 1,
**dadurch gekennzeichnet,**
**dass** die Kreiselegge (78) in ihrer Arbeitstiefe über die Walze (41) führbar ausgebildet ist.

3. Selbstfahrende Bestellkombination nach Anspruch 1,
**dadurch gekennzeichnet,**
**dass** vor der Walze (41) tiefen- und winkeleinstellbare Planierwerkzeuge (60) angeordnet sind.

4. Selbstfahrende Bestellkombination nach Anspruch 1,
**dadurch gekennzeichnet,**
**dass** die Walze (41) mit mehreren, nebeneinander angeordneten Walzenelementen (70) ausgerüstet ist die in Arbeitsrichtung (71) hinter den Rädern (4) der Triebachse (3) beidseitig der Tankeinheit (49) Freiräume (72) belassend angeordnet sind.

5. Selbstfahrende Bestellkombination nach Anspruch 1,
**dadurch gekennzeichnet,**
**dass** auch die Walze (41) aushebbar und absenkbar ausgebildet ist, vorzugsweise wechselseitig mit der hinteren Achse (21).

6. Selbstfahrende Bestellkombination nach Anspruch 1,
**dadurch gekennzeichnet,**
**dass** hinter der hinteren Achse (21) und vor der mit Säscharen (32) ausgerüsteten Säschiene (31) Reihenverdichter (35) vorgesehen sind, vorzugsweise eine Packerwalze (36) mit nebeneinander angeordneten Ringelementen (37).

7. Selbstfahrende Bestellkombination nach einem der vorhergehenden Ansprüche,
**dadurch gekennzeichnet,**
**dass** die Säschiene (31) mit Säscharen (32), die Bodenbearbeitungseinheit (40) und auch der Reihenverdichter (35) einklappbar ausgebildet sind.

8. Selbstfahrende Bestellkombination nach Anspruch 1,
**dadurch gekennzeichnet,**
**dass** die Kreiselegge (78) über einen Antriebsstrang durch die Motorgetriebeeinheit (2) antreibbar ausgebildet ist und dass dem Antriebstrang eine das Antriebsdrehmoment erfassende und bei Überschreiten eines vorgebbaren Grenzwertes unterbrechende Einrichtung zugeordnet ist.

9. Selbstfahrende Bestellkombination nach Anspruch 1,
**dadurch gekennzeichnet,**
**dass** eine bei Erreichen eines Drehmomentgrenzwertes eine kurzzeitige Drehrichtungsumkehr der rotierenden Werkzeuge bewirkende Schaltvorrichtung vorgesehen ist.

10. Selbstfahrende Bestellkombination nach Anspruch 1 bis 9,
**dadurch gekennzeichnet,**
**dass** die Tankeinheit (49) aus mehreren Kammern besteht, die für die Aufnahme von Dünger und/oder mindestens einer Saatgutsorte geeignet ausgebildet ist.

## Claims

1. Self-propelled cultivating and sowing combination (1) with a tank unit (49), with at least one drive axle (3) and a rear axle (21), with an intermediate attachment space holding attachable subassemblies and a rear attachment space holding other subassemblies, wherein a tillage unit (40) is associated with the intermediate attachment space and seed coulters (32) are associated with the rear attachment space,
**characterised in that**
the tillage unit (40) is formed as a circular spike harrow (78) with rotating working implements (53), and a roller (41) is disposed in front of the circular spike harrow (78), which roller is formed in such a way that it effects an all-over rear consolidation of the soil in conjunction with the wheels (4) of the drive axle (3) and is preferably motor-driven, and that the rear axle (21) can be raised and lowered.

2. Self-propelled cultivating and sowing combination according to Claim 1,
**characterised in that**
the circular spike harrow (78) is formed such that it can be guided in its working depth via the roller (41).

3. Self-propelled cultivating and sowing combination according to Claim 1,
**characterised in that**
levelling implements (60), which can be adjusted in terms of depth and angle, are disposed in front of the roller (41).

4. Self-propelled cultivating and sowing combination according to Claim 1,
**characterised in that**
the roller (41) is provided with a plurality of roller elements (70) disposed side by side and behind the wheels (4) of the drive axle (3) in the driving direction (71) on both sides of the tank unit (49) so as to leave free spaces (72).

5. Self-propelled cultivating and sowing combination according to Claim 1,
**characterised in that**
the roller (41) is also formed such that it can be raised and lowered, preferably alternating with the rear axle (21).

6. Self-propelled cultivating and sowing combination according to Claim 1,
**characterised in that**
row compacters (35) are provided behind the rear axle (21) and in front of the seed rail (31) provided with seed coulters (32), preferably a packer roller (36) with ring elements (37) disposed side by side.

7. Self-propelled cultivating and sowing combination according to any one of the preceding Claims,
**characterised in that**
the seed rail (31) with seed coulters (32), the tillage unit (40) and also the row compacter (35) are formed such that they can be swung in.

8. Self-propelled cultivating and sowing combination according to Claim 1,
**characterised in that**
the circular spike harrow (78) is formed such that it can be driven via a drive train by the engine-transmission unit (2), and that a device which detects the drive torque and interrupts it when a predeterminable limit value is reached is associated with the drive train.

9. Self-propelled cultivating and sowing combination according to Claim 1,
**characterised in that**
a switching mechanism is provided which, when a torque limit value is reached, effects a short-time reversal of the direction of rotation of the rotating implements.

10. Self-propelled cultivating and sowing combination according to Claims 1 to 9,
**characterised in that**
the tank unit (49) consists of a plurality of chambers which are appropriately formed to hold fertiliser and/or at least one type of seed.

## Revendications

1. Machine combinée de culture et de semis automotrice (1) avec une unité de ravitaillement (49), avec au moins un essieu moteur (3) et un essieu arrière (21), avec un espace de montage intermédiaire qui accueille des sous-groupes montables et un espace de montage arrière qui accueille d'autres sous-groupes, étant donné qu'une unité de traitement de sol (40) est affectée à l'espace de montage intermédiaire et des socs de semoir (32) sont affectés à l'espace de montage arrière,
**caractérisée en ce que**
l'unité de traitement de sol (40) est formée comme herse rotative (78) avec outils de travail rotatifs (53) et est disposé devant la herse rotative (78) un rouleau (41) qui est formé de manière à avoir pour effet un rétro-affermissement du sol sur toute sa surface en combinaison avec les roues (4) de l'essieu moteur (3) et est de préférence commandé par moteur, et **en ce que** l'essieu arrière (21) peut être soulevé et abaissé.

2. Machine combinée de culture et de semis automotrice selon la revendication 1,
**caractérisée en ce que**
la herse rotative (78) est formée de manière à pouvoir être conduite à sa profondeur de travail par l'intermédiaire du rouleau (41).

3. Machine combinée de culture et de semis automotrice selon la revendication 1,
**caractérisée en ce que**
des outils de nivellement (60) à profondeur et angle réglables sont disposés devant le rouleau (41).

4. Machine combinée de culture et de semis automotrice selon la revendication 1,
**caractérisée en ce que**
Le rouleau (41) est équipé de plusieurs éléments de rouleau (70) disposés l'un à côté de l'autre, éléments qui sont disposés de manière à laisser des espaces libres (72) sur les deux côtés de l'unité de ravitaillement (49) dans le sens de travail (71) derrière les roues (4) de l'essieu moteur (3).

5. Machine combinée de culture et de semis automotrice selon la revendication 1,
**caractérisée en ce que**
le rouleau (41) peut également être soulevé et abaissé, de préférence alternativement avec l'essieu arrière (21).

6. Machine combinée de culture et de semis automotrice selon la revendication 1,
**caractérisée en ce que**
sont prévus derrière l'essieu arrière (21) et devant la barre de semoir (31) équipée de socs de semoir (32) des compresseurs en série (35), de préférence un rouleau packer (36) avec éléments annulaires (37) disposés l'un à côté de l'autre.

7. Machine combinée de culture et de semis automotrice selon l'une quelconque des revendications précédentes,
**caractérisée en ce que**
la barre de semoir (31) avec socs de semoir (32), l'unité de traitement de sol (40) ainsi que le compresseur en série (35) sont formés de manière à être rétractables.

8. Machine combinée de culture et de semis automotrice selon la revendication 1,
**caractérisée en ce que**
la herse rotative (78) est formée de manière à pouvoir être entraînée par l'intermédiaire d'une chaîne cinématique par le bloc-moteur (2), et **en ce qu'**est affecté à la chaîne cinématique un organe qui saisit le couple d'entraînement et, en cas de dépassement d'une valeur limite pouvant être définie au préalable, l'interrompt.

9. Machine combinée de culture et de semis automotrice selon la revendication 1,
**caractérisée en ce que**
un dispositif commutateur qui provoque une brève inversion du sens de rotation des outils rotatifs lorsqu'une valeur limite de couple est atteinte est prévu.

10. Machine combinée de culture et de semis automotrice selon les revendications 1 à 9,
**caractérisée en ce que**
l'unité de ravitaillement (49) se compose de plusieurs chambres qui sont formées de manière à pouvoir recevoir de l'engrais et/ou au moins un type de semence.
